# EUROPÄISCHE PATENTSCHRIFT

(11) **EP 2 380 472 B1**
(45) Veröffentlichungstag und Bekanntmachung des Hinweises auf die Patenterteilung: **05.12.2012**
(21) Anmeldenummer: 11161932.6
(22) Anmeldetag: 11.04.2011
(51) Int. Cl.: A47J 31/42, A47J 42/50

(54) **Kaffeemaschine**
Coffee machine
Machine à café

(30) Priorität: 22.04.2010 DE 202010005283 U
(43) Veröffentlichungstag der Anmeldung: 26.10.2011
(73) Patentinhaber: WIK Far East Ltd., North Point, Hong Kong (CN)
(72) Erfinder: Lüke, Werner, 44879 Bochum (DE); Speh, Christoph, 45475 Mülheim an der Ruhr (DE)
(74) Vertreter: Haverkamp, Jens

(56) Entgegenhaltungen:
- WO-A2-2010/064902
- DE-U1-202010 001 953
- ES-U- 1 056 069
- JP-A- 2006 346 061
- Solis AG: "Bedienungsanleitung Solis ULTRA", CH-8152 Glattbrugg , Juni 2005 (2005-06), XP002652106, Gefunden im Internet: URL:http://www.solis.de/pdfs/ultra_d.pdf [gefunden am 2010-07-20]
- WIK Elektro-Hausgeräte: "Bedienungsanleitung (DE) CREMAROMA AUTO-CAPPUCCINO Mod. 9757", P.O. Box 11 04 63, D-45334 Essen, Germany , 2010, XP002652107, Gefunden im Internet: URL:http://www.kaffeevollautomaten.org/kaf feemaschinen/wik/859_kaffeevollautomat_975 7/downloads/WIK_9757_Anleitung.pdf [gefunden am 2011-07-20]

## Beschreibung

Die Erfindung betrifft eine Kaffeemaschine umfassend einen Kaffeebohnenbehälter mit einem Behältnis zur Aufnahme von Kaffeebohnen, welches Behältnis eine oberseitige Öffnung zum Einfüllen von Kaffeebohnen und einen Auslauf zur Ausgabe von Bohnen an ein Mahlwerk aufweist, und mit einem Deckel zum Verschließen der Einfüllöffnung des Behältnisses, wobei die Kaffeemaschine einen Kaffeebohnenbehälteraufsatz zum Vergrößern des Fassungsvermögens seines Behältnisses umfasst, der, wenn auf den Kaffeebohnenbehälter aufgesetzt, auf dem Gehäuse der Kaffeemaschine und/oder an oder in dem Behältnis abgestützt gehalten ist, welcher Aufsatz über eine oberseitige Öffnung zum Einfüllen von Kaffeebohnen und über eine umlaufende, mit ihrem unteren Abschnitt durch die Einfüllöffnung des Behältnisses einpassende Wand verfügt.

Vielfach verfügen Kaffeemaschinen, insbesondere so genannte Vollautomaten, über einen Kaffeebohnenbehälter zur Aufbewahrung von Kaffeebohnen. Bei derartigen Kaffeemaschinen wird das für die Bereitung eines Kaffeegetränks benötigte Kaffeemehl vor jedem Brühvorgang frisch gemahlen. Ein solcher Kaffeebohnenbehälter weist oberseitig eine durch einen Deckel verschließbare Öffnung auf, durch die das Behältnis des Kaffeebohnenbehälters mit Kaffeebohnen befüllt werden kann. Das Behältnis verfügt zudem über einen unterseitig angeordneten Auslauf, aus dem schwerkraftbedingt Bohnen zum Zuführen derselben an das Mahlwerk ausgegeben werden. In vielen Fällen verfügt ein solcher Kaffeebohnenbehälter zusätzlich über einen integrierten Kaffeepulverschacht, durch den gemahlenes Kaffeepulver unter Umgehung des Mahlwerkes der Brühkammer der der Kaffeemaschine zugeordneten Brüheinheit zugeführt werden kann.

Bei manchen vorbekannten Kaffeemaschinen ist der Kaffeebohnenbehälter als Aufsatz konzipiert. Eine solche Kaffeemaschine ist beispielsweise aus EP 1 440 642 B1 bekannt. Angeschlossen wird dieser an die Kaffeemaschine mit einem den Auslauf des Behältnisses einfassenden Kupplungsring, mit dem der Kaffeebohnenbehälter unmittelbar oberhalb des Mahlwerkes an dem Gehäuse der Kaffeemaschine gehalten ist. Diese externen Kaffeebohnenbehälter sind typischerweise relativ voluminös, weshalb diese bei vor allem in der Höhe begrenztem Stellraum, vielfach nicht eingesetzt werden können. Die notwendige Höhe ist vor allem dadurch bedingt, dass der Boden zum Auslauf hin eine gewisse Neigung aufweisen muss, damit die in dem Behältnis des Kaffeebohnenbehälters befindlichen Bohnen schwerkraftbedingt bestrebt sind, zum Auslauf bewegt zu werden. Daher muss ein solcher Kaffeebohnenbehälter zum Auslauf hin nach Art eines Trichters ausgeführt sein. Vor diesem Hintergrund versteht es sich, dass zum Erreichen eines bestimmten Fassungsvermögens eine bestimmte Höhe des Kaffeebohnenbehälters unerlässlich ist. Den vorbekannten, als Aufsatz für Kaffeemaschinen konzipierten Kaffeebohnenbehältern ist gemein, dass sich diese aufgrund der notwendigen technischen Erfordernisse, wenn überhaupt, nur schwer in das Design der Kaffeemaschine einbinden ließen.

Aus diesem Grunde sind Kaffeemaschinen mit integrierten Kaffeebohnenbehältern entwickelt worden. Die Kaffeebohnenbehälter dieser Kaffeemaschinen verfügen über ein in das Gehäuse der Kaffeemaschine integriertes Behältnis. Um derartige Kaffeemaschinen vom Design her nicht zu voluminös erscheinen zu lassen, sind deren Kaffeebohnenbehälter typischerweise nur mit einem relativ geringen Fassungsvermögen ausgestattet. Die Folge ist, dass der Kaffeebohnenbehälter relativ häufig neu mit Kaffeebohnen befüllt werden muss.

Aus JP 2006-346061 A ist eine Kaffeemaschine zum Bereiten von Filterkaffee bekannt geworden. Diese Kaffeemaschine verfügt über ein Mahlwerk und eine Bohnenaufnahmekammer. Diese Kammer dient zur Aufnahme von Kaffeebohnen, die im Zusammenhang mit der Bereitung einer Kanne Kaffee benötigt werden. Das Fassungsvermögen dieser Bohnenaufnahmekammer kann vergrößert werden, wenn in die Einfüllöffnung dieser Kammer ein Aufsatz eingesteckt wird. Bei dieser vorbekannten Kaffeemaschine ist die Bohnenaufnahmekammer unverschlossen. Gleiches gilt bezüglich der Einfüllöffnung für den Kaffeebohnenbehälteraufsatz. Dieses ist bei der vorbekannten Kaffeemaschine auch nicht erforderlich, da darin nur soviel Kaffeebohnen aufbewahrt werden, wie für die Bereitung einer Kanne Filterkaffee benötigt.

Ausgehend von diesem diskutierten Stand der Technik liegt der Erfindung daher die Aufgabe zugrunde, eine Kaffeemaschine mit einem Kaffeebohnenbehälter, insbesondere mit einem in das Gehäuse derselben integrierten Kaffeebohnenbehälter weiterzubilden, damit diese nicht nur eine Vergrößerung des Fassungsvolumens des Kaffeebohnenbehälters durch Verwenden eines Kaffeebohnenbehälteraufsatzes gestattet, sondern damit zudem ein Verschluss des Kaffeebohnenbehälters möglich ist und damit eine bessere Anbindung des Kaffeebohnenbehälteraufsatzes gegeben ist.

Gelöst wird diese Aufgabe erfindungsgemäß durch eine Kaffeemaschine mit den Merkmalen des Anspruchs 1.

Bei dieser Kaffeemaschine ist der Deckel lösbar an den Kaffeebohnenbehälter angeschlossen. Unter dem im Rahmen dieser Ausführungen benutzten Begriff des lösbaren Anschließens des Deckels an den Kaffeebohnenbehälter oder auch an den Aufsatz ist ein manuell leicht lösbarer Anschluss zu verstehen. Dieser ist ausgebildet, dass im Rahmen der üblichen Benutzung der Deckel ohne weiteres gelöst und auch wieder montiert werden kann. Mithin kann, wenn gewünscht, der Deckel vom Kaffeebohnenbehälter getrennt werden. Infolge dessen ist die sich typischerweise über die gesamte maximale Querschnittsfläche des zur Aufnahme der Kaffeebohnen vorgesehenen Behältnisses erstreckende Einfüllöffnung umfänglich zugänglich und dazu genutzt werden, einen der Kaffeemaschine zugeordneten Kaffeebohnenbehälteraufsatz zum Vergrößern des Fassungsvermögens des Behältnisses mit dem typischerweise in die Kaffeemaschine integrierten Kaffeebohnenbehälter zu verbinden. Der Aufsatz ist oberseitig konzipiert wie das Behältnis des Kaffeebohnenbehälters bzw. der Kaffeebohnenbehälter, weist insbesondere eine gleiche Geometrie seiner Einfüllöffnung auf. Dieses ermöglicht, den vorhandenen Deckel des Kaffeebohnenbehälters an den Aufsatz anzuschließen und zum Verschließen der oberseitigen Öffnung des Aufsatzes zu verwenden. Der Aufsatz selbst umfasst eine umlaufende Wand, die mit ihrem unteren Ende in die Einfüllöffnung des Behältnisses des Kaffeebohnenbehälters einpasst. Gegenüber dem Behältnis ist diese umlaufende Wand durch eine lösbare Rastung gehalten, und zwar vor allem in einer Richtung entgegen der Aufsteck- bzw. Aufsetzbewegung des Aufsatzes. Ein Entfernen des Aufsatzes von dem Kaffeebohnenbehälter erfolgt sodann durch Überwinden der durch die Rastung bereitgestellten Haltekräfte. Ist der Aufsatz auf den Kaffeebohnenbehälter aufgesetzt, stützt sich dieser entweder auf dem Gehäuse der Kaffeemaschine und/oder an oder in dem Behältnis des Kaffeebohnenbehälters ab. Somit erfolgt eine Krafteinleitung in Richtung der Aufsteckbewegung von dem Aufsatz in die Kaffeemaschine über diese Abstützanordnung. Demzufolge braucht die vorbeschriebene lösbare Rastung nur solche Haltekräfte bereitzustellen, damit ein unbeabsichtigtes Abheben des Aufsatzes von dem Kaffeebohnenbehälter vermieden ist. Dieses ist mit relativ kleinen Kräften möglich. Zur Realisierung der lösbaren Rastung zwischen der umlaufenden Wand des Aufsatzes und dem Behältnis des Kaffeebohnenbehälters verfügt die umlaufende Wand des Aufsatzes außenseitig über erste Rastverriegelungselemente. Diesen sind an der Behältnisinnenwand zweite, zu den ersten Rastverriegelungselementen komplementäre Rastverriegelungselemente zugeordnet. Die typischerweise mehreren, aus jeweils zwei komplementären Rastverriegelungselementen gebildeten Rastverriegelungselementpaare sind bei bestimmungsgemäß auf den Kaffeebohnenbehälter aufgesetztem Aufsatz miteinander in Eingriff gestellt. Gemäß einem bevorzugten Ausführungsbeispiel sind die der umlaufenden Wand zugeordneten ersten Rastverriegelungselemente als Rastwülste konzipiert. Im Gegenzuge sind die komplementären, der Behältnisinnenwand zugeordneten zweiten Rastverriegelungselemente als Hinterschnitte im Bezug auf die Montage- bzw. Demontagebewegung des Aufsatzes konzipiert.

Eine solchermaßen konzipierte Kaffeemaschine erlaubt es, die Kaffeemaschine samt Kaffeebohnenbehälter mit einer relativ geringen Aufbauhöhe zu konzipieren. Diese umfasst den geräteseitig vorgesehenen Kaffeebohnenbehälter. Ist jedoch gewünscht, das Fassungsvermögen des Kaffeebohnenbehälters zu vergrößern, wird der Aufsatz auf den Kaffeebohnenbehälter aufgesetzt. Sodann können die Vorteile eines hinsichtlich seines Fassungsvermögens vergrößerten Bohnenbehälters genutzt werden. Ist der Kaffeebohnenbehälter, wie dieses typischerweise der Fall sein wird, in das Gehäuse der Kaffeemaschine integriert, befinden sich der Auslauf und die an den Auslauf angrenzende trichterförmige Bodenstruktur des Behältnisses innerhalb der Kaffeemaschine. Das Design des Aufsatzes des Kaffeebohnenbehälters lässt sich daher sehr viel besser in das Design der Kaffeemaschine integrieren, so dass die Gesamtheit aus Kaffeemaschine, Kaffeebohnenbehälter und insbesondere mit aufgesetztem Aufsatz als designerische Einheit gestaltet werden kann.

Damit die komplementären Rastverriegelungselemente zwischen der umlaufenden Wand des Aufsatzes und dem Behältnis miteinander in Eingriff gestellt werden können, wobei die Rastwülste für die Zwecke der Rastung in die Hinterschnitte eingeführt werden müssen, ist in einem Ausführungsbeispiel vorgesehen, dass die behälterinnenwandseitig angeordneten Hinterschnitte durch eine innenseitig über die Behältniswand auskragende Dichtung bereitgestellt wird. Eine solche Dichtung befindet sich am oberen Abschluss des Behältnisses und stellt typischerweise eine umlaufende Deckeldichtung dar. Bei dieser Ausgestaltung werden die elastischen Eigenschaften des Dichtungsmaterials nicht nur für die Deckelabdichtung genutzt, sondern auch zum Durchlassen der von der umlaufenden Wand außenseitig abragenden Rastwülste, und zwar gegen die elastischen Rückstellkräfte in radialer Richtung der Dichtung.

Eine Montage des Deckels an dem Kaffeebohnenbehälter und an dem Aufsatz erfolgt mit gleichen Mitteln. Gemäß einer Ausgestaltung ist für eine einfache Montage und Demontage des Deckels alternativ an dem Kaffeebohnenbehälter oder an dem Aufsatz vorgesehen, dass dem Deckel ein Scharnier zugeordnet ist, wobei der Deckel an das eine Teil des Scharniers angeschlossen ist. An das gegenüber dem Deckel mittels des Scharniers andere bewegliche Teil sind ein oder mehrere Montagefortsätze an das Scharnier angeformt. Diese sind laschenartig konzipiert und verfügen über eine Verriegelungsöffnung. Sowohl der Kaffeebohnenbehälter als auch der Aufsatz weisen komplementäre, jeweils einem Montagefortsatz zugeordnete Montagetasche oder eine einzige sich über die Erstreckung der Montagefortsätze erstreckende Montagetasche auf. Der bzw. die Montagefortsätze des Deckels können ohne weiteres in eine solche Montagetasche eingeführt werden. Eine solche Montagetasche erstreckt sich typischerweise in vertikaler Richtung, so dass in Bezug auf die Schwenkbewegung des Deckels die in die Montagetaschen eingreifenden Fortsätze das Drehwiderlager bilden. Gegen ein unbeabsichtigtes Herausziehen des Deckels mit dem Scharnier und den Montagefortsätzen aus der oder den Montagetaschen sind die Montagefortsätze, wenn in eine Montagetasche eingreifend, verrastet in diesen gehalten. Zu diesem Zweck ist zumindest eine eine solche Montagetasche bildende Wand nachgiebig und verfügt über eine in die Verriegelungsöffnung des oder der Montagefortsätze eingreifende Raste. Somit ist der Deckel problemlos demontierbar, um die Kaffeemaschine mit einem Kaffeebohnenbehälteraufsatz auszurüsten oder um einen solchen zu entfernen, um anschließend erneut an den durch den Aufsatz vergrößerten oder an den regulären Kaffeebohnenbehälter angeschlossen werden zu können.

Weitere Vorteile der Erfindung ergeben sich aus der nachfolgenden Beschreibung eines Ausführungsbeispiels unter Bezugnahme auf die beigefügten Figuren. Es zeigen:
- **Fig. 1:**: eine perspektivische Ansicht einer Kaffeemaschine mit einem integrierten Kaffeebohnenbehälter,
- **Fig. 2:**: einen Querschnitt durch den Kaffeebohnenbehälter der Kaffeemaschine der Figur 1 mit abgenommenem Deckel,
- **Fig. 3:**: in einer vergrößerten Darstellung einen Schnitt durch den Kaffeebohnenbehälter der Kaffeemaschine der Figuren 1 und 2 mit einen darauf aufgesetzten Kaffeebohnenbehälteraufsatz,
- **Fig. 3a:**: ein vergrößerter Ausschnitt auf der Darstellung der Figur 3,
- **Fig. 4:**: ein Längsschnitt durch den Kaffeebohnenbehälter der Figur 3,
- **Fig. 4a:**: ein vergrößerter Ausschnitt aus dem Längsschnitt der Figur 4 und
- **Fig. 5a, 5b:**: vergrößerte Ausschnitte aus einem weiteren Längsschnitt durch den Kaffeebohnenbehälter aus der vorderen Wand des Aufsatzes (Figur 5a) und aus dem Bereich seiner hinteren Wand (Figur 5b).

Eine Kaffeemaschine 1 verfügt über ein Gehäuse 2, in dem die für die Getränkebereitung notwendigen Aggregate enthalten sind, unter anderem eine Brüheinheit, Pumpen, Heizelement etc. An der Vorderseite der Kaffeemaschine 1 befindet sich ein Auslauf 3 zum Ausgeben des mit der Kaffeemaschine 1 gebrühten Getränks. Unterhalb des Auslaufes 3 verfügt die Kaffeemaschine 1 über zwei in der Kaffeemaschine 1 angeordnete Behälter 4, 5, die nach Art einer Schublade aus dem Gehäuse 2 heraus und umgekehrt in diese eingeschoben werden können. Bei dem Behälter 4 handelt es sich um einen Frischwasserbehälter, in dem Frischwasser für die Bereitung der Getränke oder auch für die Bereitung von Heißwasser und/oder Heißdampf bevorratet wird. Bei dem Behälter 5 handelt es sich um einen Tresterbehälter, in den nach der Bereitung eines Kaffeegetränks der Filterkuchen eingebracht wird.

Teil der Kaffeemaschine 1 ist eine insgesamt mit dem Bezugszeichen 6 gekennzeichnete Einrichtung zum Aufstellen von zumindest einem Trinkgefäß zum Auffangen eines durch den Auslauf 3 ausgegebenen Getränks. Die Aufstelleinrichtung 6 umfasst einen nach Art einer Wanne konzipierten Restflüssigkeitssammelbehälter 7. Dieser ist oberseitig durch ein Tropfblech 8 abgedeckt. Das Tropfblech 8 verfügt über Durchbrechungen, um nicht in einem Trinkgefäß aufgefangene Flüssigkeit durch den darunter befindlichen Restflüssigkeitssammelbehälter 7 auffangen zu können.

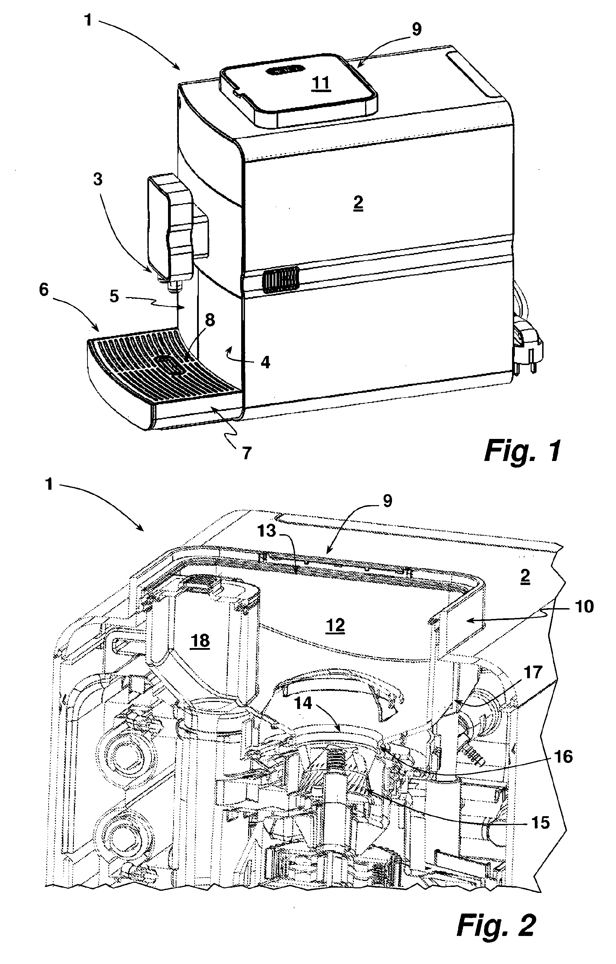

Die Kaffeemaschine 1 verfügt des Weiteren über einen in das Gehäuse 2 integrierten Kaffeebohnenbehälter 9. Der Kaffeebohnenbehälter 9 ist bei dem dargestellten Ausführungsbeispiel durch eine umlaufende Wand 10 des Gehäuses 2 eingefasst und durch einen Deckel 11 verschlossen. Der Deckel 11 ist schwenkbar angelenkt und kann zum Öffnen des Kaffeebohnenbehälters aufgeschwenkt werden. Das Scharnier zum Aufschwenken des Deckels 11 befindet sich am rechten Rand des Deckels 11 der Figur 1. Der Kaffeebohnenbehälter 9 verfügt über ein in das Gehäuse 2 der Kaffeemaschine 1 integriertes Behältnis 12 zum Bevorraten von Kaffeebohnen. Das Behältnis 12 weist eine oberseitige Öffnung 13 auf, durch die bei geöffnetem Deckel 11 Kaffeebohnen in das Behältnis 12 eingefüllt werden können. Die Öffnung 13 des Behältnisses 12 wird gebildet durch parallele Wände. Damit ist die Querschnittsfläche des Behältnisses 12 in seinem oberen Abschnitt gleich bleibend. Der Boden des Behältnisses 12 ist trichterförmig zu einem Auslauf 14 hin verjüngt. Die in dem Behältnis 12 enthaltenen Kaffeebohnen werden sodann schwerkraftbedingt dem Auslauf 14 zugeführt. Unterhalb des Auslaufes 14 befindet sich ein Mahlwerk 15. Der Auslauf 14 ist mit einem Kragen 16 an das Mahlwerk 15 angeschlossen, was wiederum dem Zweck dient, beim Mahlen entstehende Schwingungen auf den Boden des Behältnisses 12 zu übertragen, um auf diese Weise eine Förderung von in dem Behältnis 12 befindlicher Kaffeebohnen in Richtung zum Auslauf 14 hin zu unterstützen.

Das Behältnis 12 ist innerhalb des Gehäuses 2 in einer Behältnisaufnahme 17 angeordnet. Teil der Behältnisaufnahme 17 ist die bereits vorbeschriebene Wand 10.

Teil des Behältnisses 12 ist des Weiteren ein Einfüllschacht 18, der seinerseits mit einem Deckel verschlossen ist. Der Einfüllschacht 18 dient zum Zuführen von gemahlenem Kaffeepulver in die Brühkammer der Brüheinheit unter Umgehung des Mahlwerkes 15.

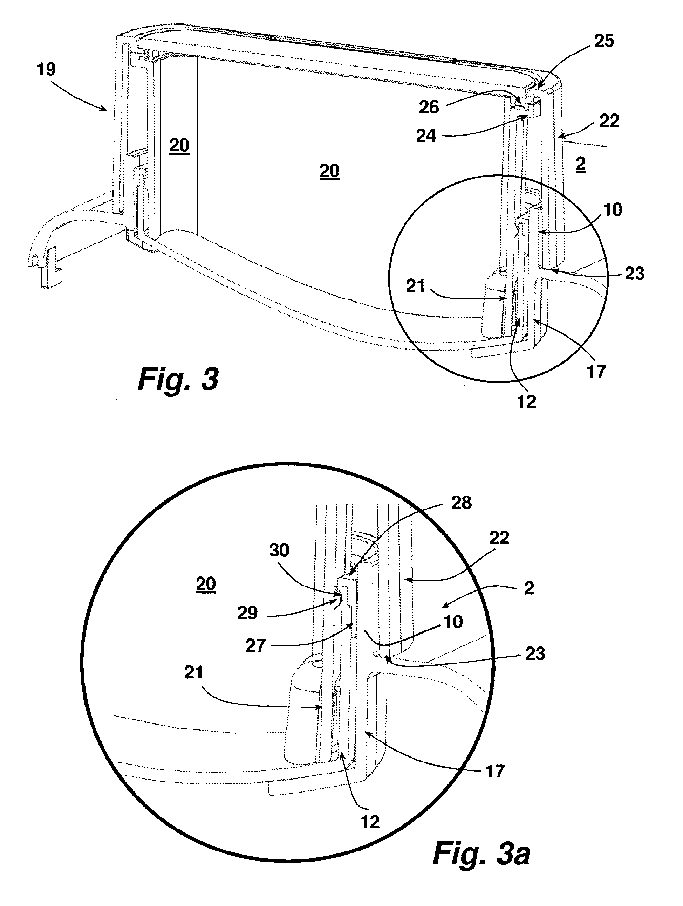

Der Kaffeemaschine 1 zugehörig ist ein Kaffeebohnenbehälteraufsatz 19, der, wie aus Figur 3 erkennbar, zur Vergrößerung des Fassungsvermögens des Kaffeebohnenbehälters 9 bzw. seines Behältnisses 12 auf diesen aufgesetzt ist. Der Kaffeebohnenbehälteraufsatz 19 verfügt über eine umlaufende Wand 20, die mit einem Abschnitt 21 in das Behältnis 12 eingreift. Durch den Aufsatz 19 wird die mögliche Füllhöhe des mit dem Aufsatz 19 ausgerüsteten Kaffeebohnenbehälters 9 vergrößert.

Der Aufsatz 19 des dargestellten Ausführungsbeispiels ist doppelwandig konzipiert und verfügt neben der umlaufenden Wand 20 über eine äußere, die umlaufende Wand 20 einfassende und von dieser beabstandete Stützwand 22. Die Stützwand 22 stützt sich mit ihrer unteren Stirnseite 23 auf der Außenseite des Gehäuses 2 der Kaffeemaschine 1 ab. Somit ist durch die beschriebene Abstützanordnung der Aufsatz 19 in vertikaler Richtung nach unten durch Anschlagen der Stirnseite 23 auf die Außenseite des Gehäuses 2 begrenzt und hierdurch abgestützt. Wie aus Figur 3 erkennbar, wird beim Aufsetzen des Aufsatzes 19 die Wand 10 des Gehäuses 2 zwischen die umlaufende Wand 20 und die Stützwand 22 aufgenommen. Die Stützwand 22 und die umlaufende Wand 20 verfügen jeweils über einen zueinander weisenden oberen Flansch 24 bzw. 25, an denen die beiden Elemente - umlaufende Wand 20 und Stützwand 22, wie dies später beschrieben ist, aneinander befestigt sind. Zwischen den beiden Flanschen 24, 25 befindet sich eine umlaufende Dichtung 26. Die Dichtung 26 bildet die Deckeldichtung.

Figur 3a zeigt einen vergrößerten Ausschnitt der Darstellung der Figur 3 im Bereich der Wand 10. Die Wand 10 ist Teil der bereits vorstehend erläuterten Behältnisaufnahme 17, welches wiederum dem Gehäuse 2 zugeordnet ist. Das Behältnis 12 des Kaffeebohnenbehälters 9 ist in dieser Behältnisaufnahme 17 gehalten. Zwischen der Innenseite der Wand 10 und der Außenseite des Behältnisses 12 ist im Bereich des oberen Endes des Behältnisses 12 ein Befestigungsschenkel 27 einer umlaufenden Dichtung 28 eingeklemmt gehalten. Die Dichtung 28 fasst den oberen Abschluss des Behältnisses 12 ein, bildet mithin eine Einfassung des oberen Abschlusses des Behältnisses 12 aus. Zum verrasteten Halten des Kaffeebohnenbehälteraufsatzes 19 mit seiner in die Öffnung 13 des Behältnisses 12 eingreifenden umlaufenden Wand 20 trägt diese an ihrer Außenseite mehrere, mit umfänglichen Abstand zueinander angeordnete Rastwülste 29 (siehe Figur 3a). Diese greifen ein in einen durch das Behältnis 12 und die dieses oberseitige begrenzende Dichtung 28 gebildeten Hinterschnitt 30. Gebildet wird der Hinterschnitt 30 letztendlich durch ein Überkragen der Dichtung 28 über die Innenseite des Behältnisses 12 in Richtung zum Inneren des Behältnisses 12. Bei dieser Konzeption ist vorgesehen, dass die Klemmkräfte zum Halten des Befestigungsschenkels 27 der Dichtung 28 zwischen der umlaufenden Wand 10 und der Außenseite des Behältnisses 12 ein Mehrfaches der Kraft entspricht, die überwunden werden muss, um den Aufsatz 19 bzw. die umlaufende Wand 20 mit ihren Rastwülsten 29 aus der in Figur 3a gezeigten rastverriegelten Stellung zum Entfernen des Aufsatzes 19 zu überwinden.

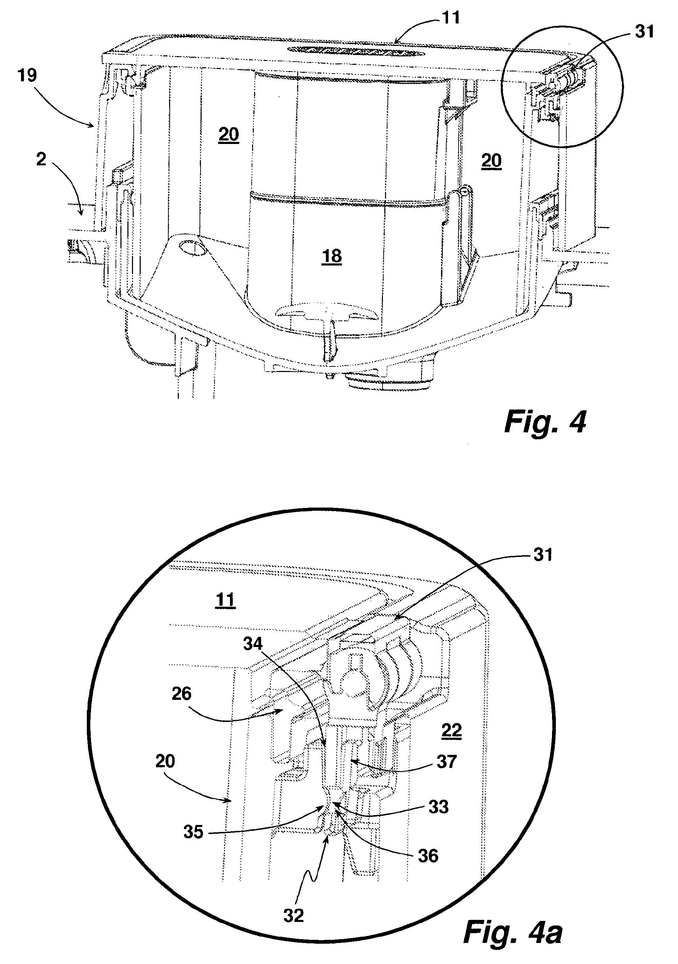

Aus Figur 4 ist der Anschluss des Deckels 11 an den Kaffeebohnenbehälteraufsatz 19 erkennbar. Der Deckel 11 ist an seinem in Figur 4 gezeigten rechten Randbereich an ein Scharnier 31 angeschlossen. Das Scharnier 31 verfügt an seiner dem Deckel 11 durch die Scharnierachse gegenüberliegenden Seite über einen Montagefortsatz 32. Bei diesem handelt es sich um ein laschenförmiges Element mit einer darin eingebrachten Verriegelungsöffnung 33. Der Montagefortsatz 32 greift in seiner an den Aufsatz 19 angeschlossenen Stellung in eine Montagetasche 34 ein. Jeweils eine Wand der Montagetasche 34 wird durch die Außenseite der umlaufenden Wand 20 bzw. durch die nach innen weisende Seite der Stützwand 22 bereitgestellt. An der zu der Verriegelungsöffnung 33 im montierten Zustand komplementären Position tragen die umlaufende Wand 20 außenseitig und die Stützwand 22 innenseitig jeweils einen Verriegelungswulst 35 bzw. 36, die in die Verriegelungsöffnung 33 eingreifen. Nachgiebiges Element für die in Figur 4a vergrößert dargestellte Rastverriegelung des Montagefortsatzes 32 ist der der Stützwand 22 zugeordnete Verriegelungswulst 36, der an einem in radialer Richtung nachgiebigen Schenkel sitzt.

Das Scharnier 31 sitzt auf einer nach oben abragenden Leiste 37 der Stützwand 22 auf, die ihrerseits in eine entsprechende Nut an der Unterseite des Scharniers eingreift. Auf diese Weise ist der Deckel 11 mit seinem Scharnier für die übliche Bedienung desselben sicher an den Aufsatz 19 angeschlossen, kann jedoch ohne weiteres durch Hochziehen desselben von dem Aufsatz 19 entfernt werden, beispielsweise wenn der Aufsatz 19 abgenommen und der Deckel 11 zum Verschließen des Kaffeebohnenbehälters 9 verwendet werden soll. Der Kaffeebohnenbehälter 9 verfügt an entsprechender Stelle ebenfalls über eine Montagetasche.

Zur Verbindung des Bauteils mit der umlaufenden Wand 20 des Aufsatzes 19 mit der Stützwand 22 tragen beide Elemente im Bereich ihrer Flansche 24 bzw. 25 komplementäre Rastverbindungselemente, wobei diese Rastverbindungselemente nach Ineingriffstellen derselben nicht lösbar sind. Die Stützwand 22 trägt bei diesem Ausführungsbeispiel mehrere nach unten weisende Verriegelungshaken 38, die jeweils ein an der umlaufenden Wand 20 angeformtes Widerlager 39 hintergreifen. Neben dem Widerlager 39 trägt das Bauteil mit der umlaufenden Wand 20 zwei jedem Widerlager 39 zugeordnete Sicherungsarme 40, die beim Einführen des Verriegelungshakens 38 von oben ausgestellt werden und in ihre ursprüngliche Form zurückspringen, wenn der Verriegelungshaken 38 das Widerlager 39 hintergreift. Dann hintergreifen die Sicherungsarme 40 die Rückseite des Verriegelungshakens 38, so dass dieser aus seinen verriegelnden Stellung nicht ohne weiteres herausbewegt werden kann. Diese Konzeption erlaubt eine einfache, jedoch sichere Montage und gibt einer die Montage durchführenden Person eine haptische und auch durch ein "Klacken" hörbare Rückmeldung, wenn der Verriegelungshaken 38 das Widerlager 39 hintergreift, mithin beide Elemente bestimmungsgemäß miteinander verbunden sind.

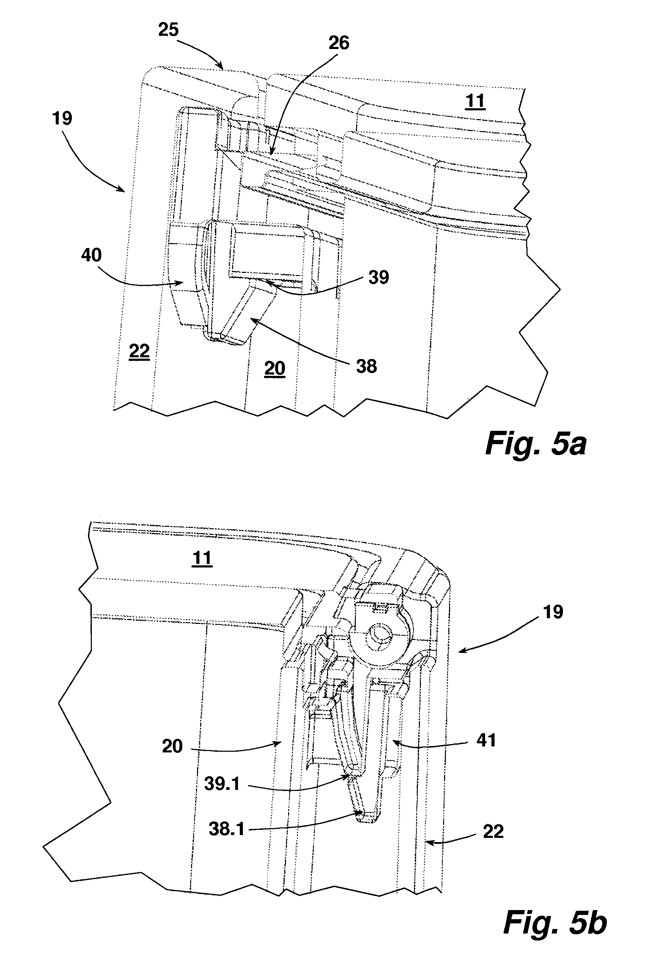

Auf der zur Rückseite der Kaffeemaschine 1 weisenden Seite ist eine andere Verriegelung zur Verriegelung des Bauteils mit der umlaufenden Wand 20 mit der Stützwand 22 vorgesehen. Zur unlösbaren Verbindung dient als nachgiebiges Element im Unterschied zu der vorbeschriebenen unlösbaren Verriegelung nicht der Verriegelungshaken, sondern ein nachgiebiges Widerlager 39.1, angeformt an das die umlaufende Wand 20 tragende Bauteil. Der Verriegelungshaken 38.1 ist von einem Steg 41, ebenfalls angeformt an das die umlaufende Wand 20 tragende Bauteil, so dass der Verriegelungshaken 38.1 rückseitig abgestützt ist und aus seiner in Figur 5b gezeigten Verriegelungsstellung nicht, zumindest nicht ohne weiteres, herausgebracht werden kann. Auch bei dieser Konzeption erhält eine die Montage ausführende Person eine haptische Rückmeldung, wenn der Montagevorgang bestimmungsgemäß ausgeführt worden ist.

Die Beschreibung der Erfindung macht deutlich, dass eine Änderung des Volumens der bevorrateten Kaffeebohnen in der Kaffeemaschine ohne Weiteres möglich ist, und zwar durch Aufsetzen des Kaffeebohnenaufsatzes auf den Kaffeebohnenbehälter oder umgekehrt durch Entfernen desselben. Ein Montieren des Kaffeebohnebehälteraufsatzes auf den Kaffeebohnenbehälter ist vor allem auch bei befülltem Kaffeebohnenbehälter möglich. Durch die in die Öffnung des Kaffeebohnebehälters eintauchende Wand werden darunter befindliche Kaffeebohnen schlicht weg in Richtung zum Zentrum des Kaffeebohnenbehälters weggedrückt. In einem typischen Ausführungsbeispiel, bei der der Kaffeebohnenbehälter in die Kaffeemaschine integriert ist, verfügt dieser über ein Fassungsvermögen von etwa 120 bis 150 Gramm Kaffeebohnen. Je nach Größe des Kaffeebohnenbehälteraufsatzes kann das Fassungsvolumen der bevorrateten Kaffeebohnen erhöht werden, beispielsweise verdoppelt oder verdreifacht werden.

Die unterschiedlichen vorbeschriebenen Konzepte der Kaffeemaschine bzw. des Bohnenbehälters und/oder seines Aufsatzes können auch unabhängig voneinander verwirklicht werden.

### Bezugszeichenliste

- 1: Kaffeemaschine
- 2: Gehäuse
- 3: Auslauf
- 4: Wasserbehälter
- 5: Tresterbehälter
- 6: Aufstelleinrichtung
- 7: Restflüssigkeitssammelbehälter
- 8: Tropfblech
- 9: Kaffeebohnenbehälter
- 10: Wand
- 11: Deckel
- 12: Behältnis
- 13: Öffnung
- 14: Auslauf
- 15: Mahlwerk
- 16: Kragen
- 17: Behältnisaufnahme
- 18: Einfüllschacht
- 19: Kaffeebohnenbehälteraufsatz
- 20: Umlaufende Wand
- 21: Abschnitt
- 22: Stützwand
- 23: Stirnseite
- 24: Flansch
- 25: Flansch
- 26: Dichtung
- 27: Befestigungsschenkel
- 28: Dichtung
- 29: Rastwulst
- 30: Hinterschnitt

- 31: Scharnier
- 32: Montagefortsatz
- 33: Verriegelungsöffnung
- 34: Montagetasche
- 35: Verriegelungswulst
- 36: Verriegelungswulst
- 37: Leiste
- 38, 38.1: Verriegelungshaken
- 39, 39.1: Widerlager
- 40: Sicherungsarm
- 41: Steg

## Patentansprüche

1. Kaffeemaschine umfassend einen Kaffeebohnenbehälter (9) mit einem Behältnis (12) zur Aufnahme von Kaffeebohnen, welches Behältnis (12) eine oberseitige Öffnung (13) zum Einfüllen von Kaffeebohnen und einen Auslauf (14) zur Ausgabe von Bohnen an ein Mahlwerk (15) aufweist, und mit einem Deckel (11) zum Verschließen der Einfüllöffnung (13) des Behältnisses (12), wobei der Deckel (11) von dem Kaffeebohnenbehälter (9) lösbar ist und die Kaffeemaschine (1) einen Kaffeebohnenbehälteraufsatz (19) zum Vergrößern des Fassungsvermögens seines Behältnisses (12) umfasst, der, wenn auf den Kaffeebohnenbehälter (9) aufgesetzt, auf dem Gehäuse (2) der Kaffeemaschine (1) und/oder an oder in dem Behältnis (12) abgestützt gehalten ist, welcher Aufsatz (19) über eine oberseitige Öffnung zum Einfüllen von Kaffeebohnen und über eine umlaufende, mit ihrem unteren Abschnitt (21) durch die Einfüllöffnung (13) des Behältnisses (12) einpassende Wand (20) verfügt, **dadurch gekennzeichnet, dass**, die umlaufende Wand (20) gegenüber dem Behältnis (12) durch eine lösbare Rastung gehalten ist und die umlaufende Wand (20) außenseitig über erste Rastverriegelungselemente (29) und die Behältniswand innenseitig über zweite, zu den ersten Rastverriegelungselementen (29) komplementäre Rastverriegelungselemente (30) verfügt und wobei die komplementären Rastverriegelungselemente (29, 30) eingerichtet sind, bei auf den Kaffeebohnenbehälter (9) aufgesetztem Aufsatz (19) miteinander in Eingriff gestellt zu sein.

2. Kaffeemaschine nach Anspruch 1, **dadurch gekennzeichnet, dass** an dem oberen Abschluss des Behältnisses (12) eine umlaufende Deckeldichtung (28) angeordnet ist und dass die umlaufende Wand (20) des Aufsatzes (19) als erste Verriegelungselemente mehrere, mit umfänglichem Abstand zueinander angeordnete Rastwülste (29) aufweist und die komplementären zweiten, gegenüber den Rastwülsten (29) als Hinterschnitte (30) konzipierten Rastverriegelungselemente des Behältnisses (12) zumindest im Bereich der zu verriegelnden Rastwülste (29) innenseitig durch die über die Behältniswand nach innen auskragende Dichtung (28) bereitgestellt sind.

3. Kaffeemaschine nach Anspruch 2, **dadurch gekennzeichnet, dass** die Dichtung (28) eine, den oberen Abschluss des Behältnisses (12) einfassende Einfassung und einen daran angeformten Befestigungsschenkel (27) aufweist, welcher Befestigungsschenkel (27) zwischen der Behältnisaußenseite und einer Behältnisaufnahme (17) eingeklemmt gehalten ist.

4. Kaffeemaschine nach Anspruch 3, **dadurch gekennzeichnet, dass** die Behältnisaufnahme (17) Teil eines Gehäuseteils (2) der Kaffeemaschine (1) ist.

5. Kaffeemaschine nach einem der Ansprüche 1 bis 4, **dadurch gekennzeichnet, dass** der Aufsatz (19) neben der umlaufenden Wand (20) über eine diese außenseitig einfassende Stützwand (22) verfügt, die bei auf den Kaffeebohnenbehälter (9) aufgesetztem Aufsatz (19) auf einem Gehäuseteil (2) der Kaffeemaschine (1) mit ihrem unteren Abschluss (23) aufsitzt.

6. Kaffeemaschine nach Anspruch 5, **dadurch gekennzeichnet, dass** die Stützwand (22) und die zu dieser innen liegende umlaufende Wand (20) des Aufsatzes (19) unter Ausbildung einer oberseitig umlaufenden Deckelauflage im Bereich ihres oberen Abschlusses durch miteinander in Eingriff gestellte Rastverriegelungselemente (38, 39; 38.1, 39.1) miteinander verbunden sind.

7. Kaffeemaschine nach Anspruch 6, **dadurch gekennzeichnet, dass** in die Verbindung zwischen der Stützwand (22) und der umlaufenden Wand (20) eine umlaufende Deckeldichtung (26) eingeschaltet ist.

8. Kaffeemaschine nach einem der Ansprüche 1 bis 7, **dadurch gekennzeichnet, dass** der Deckel (11) unter Zwischenschaltung eines Scharniers (31) lösbar an den Kaffeebohnenbehälter (9) oder an den Aufsatz (19) anschließbar ist.

9. Kaffeemaschine nach Anspruch 8, **dadurch gekennzeichnet, dass** das Scharnier (31) über zumindest einen Montagefortsatz (32) zum lösbaren Anschließen desselben an den Kaffeebohnenbehälter (9) oder an den Aufsatz (19) verfügt, welcher Montagefortsatz (32) eine Verriegelungsöffnung (33) aufweist, und wobei der Kaffeebohnenbehälter (9) und der Aufsatz (19) jeweils über eine jedem Montagefortsatz (32) zugeordnete Montagetasche (34) zur Aufnahme des Montagefortsatzes (32) verfügen, welche Montagetasche (34) zumindest eine in Querrichtung zur Montagebewegung nachgiebige Wand und eine zum Eingreifen in die Verriegelungsöffnung (33) des Montagefortsatzes (32) angeordnete Raste (35, 36) aufweist.

10. Kaffeemaschine nach Anspruch 9, **dadurch gekennzeichnet, dass** die Raste (36) an der nachgiebigen Wand der Montagetasche (34) angeordnet ist.

11. Kaffeemaschine nach Anspruch 9 oder 10, **dadurch gekennzeichnet, dass** die Montagetasche (34) an der der nachgiebigen Wand gegenüberliegenden Wand eine zum Eingreifen in die Verriegelungsöffnung (33) des Montagefortsatzes des Aufsatzes (19) angeordnete Raste (35) aufweist.

## Claims

1. A coffee machine comprising a coffee bean container (9) having a receptacle (12) for receiving coffee beans, which receptacle (12) exhibits an upper opening (13) for filling coffee beans and an outlet (14) for delivering beans to a grinding mechanism (15), and having a lid (11) for sealing the filling opening (13) of the receptacle (12), the lid (11) being detachable from the coffee bean container (9) and the coffee machine (1) comprising a coffee bean container attachment (19) which increases the capacity of its receptacle (12) and which, when attached to the coffee bean container (9), is held supported on the housing (2) of the coffee machine (1) and/or on or in the receptacle (12), said attachment (19) having an upper opening for filling coffee beans and an enclosing wall (20) which by its lower section (21) fits through the filling opening (13) of the receptacle (12), wherein the enclosing wall (20) is held against the receptacle (12) by a detachable detent and the enclosing wall (20) on the outside has first detent locking elements (29) and the receptacle wall on the inside has second detent locking elements (30) that are complementary to the first detent locking elements (29), the complementary detent locking elements (29, 30) being configured to engage in one another when the attachment (19) is mounted on to the coffee bean container (9).

2. The coffee machine of claim 1 wherein there is arranged on the upper edge of the receptacle (12) a continuous lid seal (28) and wherein the enclosing wall (20) of the attachment (19) exhibits as first locking elements a plurality of peripherally interspaced detent beads (29) and the complementary second detent locking elements of the receptacle (12) that are designed as undercuts (30) relative to the detent beads (29) are provided on the inside, at least in the region of the detent beads (29) that are to be locked, by the seal (28) projecting inwards over the receptacle wall.

3. The coffee machine of claim 2 wherein the seal (28) exhibits an edging which grips the upper edge of the receptacle (12) and a fixing leg (27) moulded to it, said fixing leg (27) being held clamped between the outside of the receptacle and a receptacle mounting (17).

4. The coffee machine of claim 3 wherein the receptacle mounting (17) is part of a housing part (2) of the coffee machine (1).

5. The coffee machine of any one of claims 1 to 4 wherein, as well as the enclosing wall (20), the attachment (19) has a supporting wall (22) which surrounds the enclosing wall (20) and which rests by its lower edge (23) on a housing part (2) of the coffee machine (1) when the attachment (19) is mounted on the coffee bean container (9).

6. The coffee machine of claim 5 wherein the supporting wall (22) and the enclosing wall (20) of the attachment (19), said enclosing wall lying on the inside of the supporting wall (22), are interconnected - by way of detent locking elements (38, 39; 38.1, 39.1) which engage with one another - to form an upper continuous lid support in the region of its upper edge.

7. The coffee machine of claim 6 wherein a continuous lid seal (26) is incorporated in the connection between the supporting wall (22) and the enclosing wall (20).

8. The coffee machine of any one of claims 1 to 7 wherein the lid (11) can through the intermediary of a hinge (31) be connected detachably to the coffee bean container (9) or to the attachment (19).

9. The coffee machine of claim 8 wherein the hinge (31) exhibits at least one mounting extension (32) for the detachable connecting of same to the coffee bean container (9) or to the attachment (19), said mounting extension (32) exhibiting a locking opening (33), and with the coffee bean container (9) and the attachment (19) each having a mounting pocket (34) associated with each mounting extension (32) for receiving the mounting extension (32), said mounting pocket (34) exhibiting at least one wall which is compliant transverse to the mounting movement and a detent (35, 36) arranged for engaging in the locking opening (33) of the mounting extension (32).

10. The coffee machine of claim 9 wherein the detent (36) is disposed on the compliant wall of the mounting pocket (34).

11. The coffee machine of claim 9 or 10 wherein the mounting pocket (34) exhibits, on the wall opposite the compliant wall, a detent (35) disposed for engaging in the locking opening (33) of the mounting extension of the attachment (19).

## Revendications

1. Machine à café comprenant un réservoir (9) de café en grains, avec un récipient (12) destiné à contenir des grains de café, lequel récipient (12) présente une ouverture (13) sur le haut pour le remplissage de grains de café et un écoulement (14) qui déverse les grains vers un moulin (15), et avec un couvercle (11) pour refermer l'ouverture (13) de remplissage du récipient (12), le couvercle (11) pouvant être détaché du réservoir (9) de café en grains et la machine à café (1) comprenant une rehausse (19) de réservoir de café en grains afin d'agrandir la capacité du récipient (12), laquelle, si elle est placée sur le réservoir (9) de café en grains, est maintenue par appui sur le châssis (2) de la machine à café (1) et/ou sur ou dans le récipient (12), laquelle rehausse (19) dispose d'une ouverture sur le haut pour le remplissage de grains de café et d'une paroi (20) périphérique qui s'ajuste par son tronçon inférieur (21) sur l'ouverture de remplissage (13) du récipient (12), **caractérisée en ce que** la paroi (20) périphérique est maintenue par rapport au récipient (12) par un enclenchement qui peut être désengagé et la paroi (20) périphérique dispose sur la face extérieure de premiers éléments (29) de verrouillage par enclenchement et **en ce que** la paroi du récipient dispose sur la face intérieure de seconds éléments (30) de verrouillage par enclenchement, complémentaires aux premiers éléments (29) de verrouillage par enclenchement et les éléments (29, 30) complémentaires de verrouillage par enclenchement étant agencés de façon à s'engager les uns dans les autres lorsque la rehausse (19) est placée sur le réservoir (9) de café en grains.

2. Machine à café selon la revendication 1, **caractérisée en ce qu'**un joint de couvercle (28) périphérique est disposé sur l'extrémité supérieure du récipient (12) et **en ce que** la paroi (20) périphérique de la rechausse (19) présente, en guise de premiers éléments de verrouillage, plusieurs bourrelets d'enclenchement disposés à distance les uns des autres sur toute la périphérie, et que les seconds éléments de verrouillage complémentaires du récipient (12) conçus comme des contre-découpes (30) par rapport aux bourrelets d'enclenchement (29) se présentent, à l'intérieur, du moins dans la zone des bourrelets (29) d'enclenchement assurant le verrouillage, sur le joint (28), en saillie vers l'intérieur, au-delà de la paroi du récipient.

3. Machine à café selon la revendication 2, **caractérisée en ce que** le joint (28) présente un rebord entourant l'extrémité supérieure du récipient (12) et un montant de fixation (27) moulé sur ce dernier, lequel montant de fixation (27) est maintenu coincé entre la face extérieure du récipient et un logement (17) de récipient.

4. Machine à café selon la revendication 3, **caractérisée en ce que** le logement (17) de récipient est une partie du châssis (2) de la machine à café (1).

5. Machine à café selon l'une des revendications 1 à 4, **caractérisée en ce que** la rehausse (19) dispose, à côté de la paroi (20) périphérique, d'une paroi d'appui (22) entourant cette dernière par l'extérieur, qui, lorsque la rehausse (19) est placée sur le réservoir (9) de café en grains, est en appui, par son extrémité (23) inférieure sur une partie de châssis (2) de la machine à café (1).

6. Machine à café selon la revendication 5, **caractérisée en ce que** la paroi d'appui (22) et la paroi (20) périphérique de la rehausse (19), située à l'intérieur par rapport à la première, sont reliées l'une à l'autre dans la zone de leur extrémité supérieure par des éléments de verrouillage à enclenchement (38, 39 ; 38.1, 39.1) s'engageant les uns dans les autres, en formant sur le haut, un support de couvercle périphérique.

7. Machine à café selon la revendication 6, **caractérisée en ce qu'**un joint de couvercle (26) périphérique est intercalé au niveau de la liaison entre la paroi d'appui (22) et la paroi périphérique (20).

8. Machine à café selon l'une des revendications 1 à 7, **caractérisée en ce que** le couvercle (11) est, grâce à une charnière (31), raccordé de façon amovible au réservoir (9) de café en grains ou à la rehausse (19).

9. Machine à café selon la revendication 8, **caractérisée en ce que** la charnière (31) dispose d'au moins un prolongement de montage (32) afin de le raccorder de manière amovible au réservoir (9) de café en grains ou à la rehausse (19), lequel prolongement de montage (32) présente une ouverture de verrouillage (33), et le réservoir (9) et la rehausse (19) présentant chacun une poche de montage (34) affectée à chaque prolongement de montage (32), destinée à loger le prolongement de montage (32), laquelle poche de montage (34) présente au moins une paroi déformable dans le sens transversal par rapport au mouvement de montage et une encoche (35, 36) disposée pour permettre l'engagement du prolongement de montage (32) dans l'ouverture de verrouillage (33).

10. Machine à café selon la revendication 9, **caractérisée en ce que** l'encoche (36) est disposée sur la paroi déformable de la poche de montage (34).

11. Machine à café selon la revendication 9 ou 10, **caractérisée en ce que** la poche de montage (34) présente sur la paroi opposée à la paroi déformable, une encoche (35) disposée pour s'engager dans l'ouverture de verrouillage (33) du prolongement de montage de la rehausse (19).
